# EUROPEAN PATENT APPLICATION

(11) **EP 2 108 562 A2**
(43) Date of publication of application: **14.10.2009**
(21) Application number: 09475501.4
(22) Date of filing: 13.02.2009
(51) Int. Cl.: B61H 1/00, F16D 65/06

(54) **Railway vehicle brake block holder**

(30) Priority: 20.02.2008 SK 212008 U
(71) Applicant: Tatravagónka, a.s., 058 01 Poprad (SK)
(72) Inventor: Ochotnica, Ján, 058 01, Poprad (SK); Bujñak, Matús, 082 71, LIPANY (SK)
(74) Representative: Rzymanova, Kamila

(57) **Abstract**

Railway vehicle brake block holder consists of two side bearers forged in the die, provided with reinforcements in the area of constraint of the bushes and reinforcements in the area of niches for brake block fastening wedges, connected with curved sheet by welding and method of its production based on production of the side bearers by flat forging in the die and then by connecting with the curved sheet by welding.

## Description

### Field of technology

Technical solution falls under the field of railway vehicles. The subject mater is a component designated for securing of the fixation of brake block position and for transmission of the brake block force.

### Actual state of technology

Holder that secures the brake block is an integrated part of brake equipment of railway vehicles and their bogies. Its task is to provide safe fixation and position for brake blocks made of grey alloy, sintered material or mixed material.

Holders that fix the brake block can be designed in the way they include one brake block - mono-block holder, or two brake blocks - double brake block holder. The holders were so-far manufactured by forging in die, casting into the form or by welding from several parts from sheet.

The important thing, from technological point of view, is curvature of brake blocks contact surface in the brake block holder and thickness of the contact surface 7 minus 1 mm. this curvature of the contact surface has to be regular and has to have identical radius, not only theoretically, as required in drawing documentation, but also practically in the manufacturing process. The whole length of the contact surface has to be perpendicular to the longitudinal central plane of the brake block holder, in such way, that the widest possible contact surface with the brake block is provided. The same applies to the distance between holes for wedge for guidance of the brake block wedge and for niches for brake block fixing pockets. Brake block holder cannot be permanently deformed during maximal braking force. Suitability of the brake block holder has to be proved by determination of the fatigue limits through testing forces and number of cycles. In order to secure an exchangeability of the brake block holders, it is important for the main dimensions of the brake block holder to be in compliance with required dimensions of the EU standards and standards of the International Railway Union (UIC).

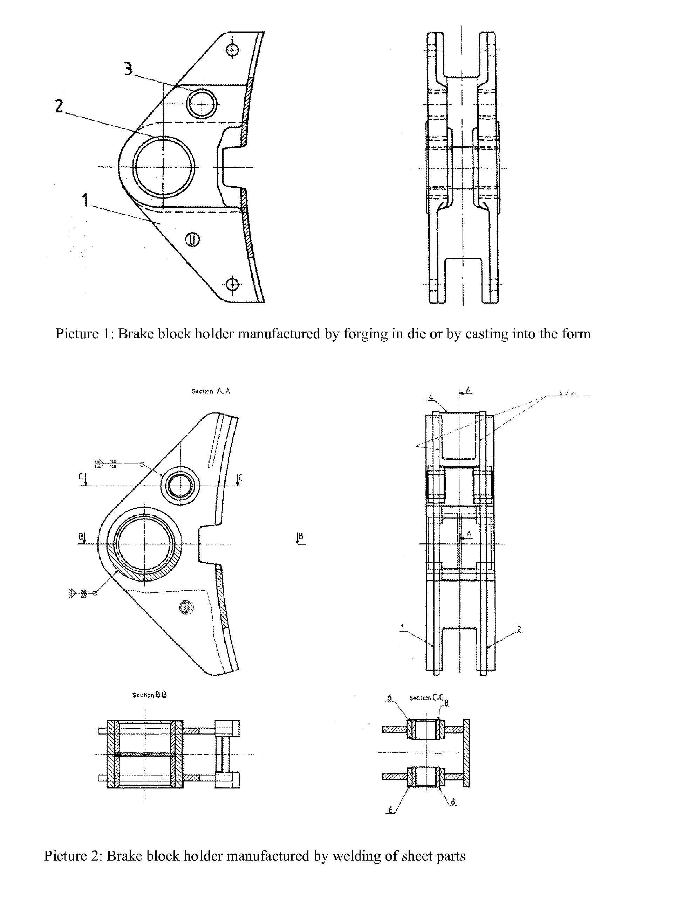

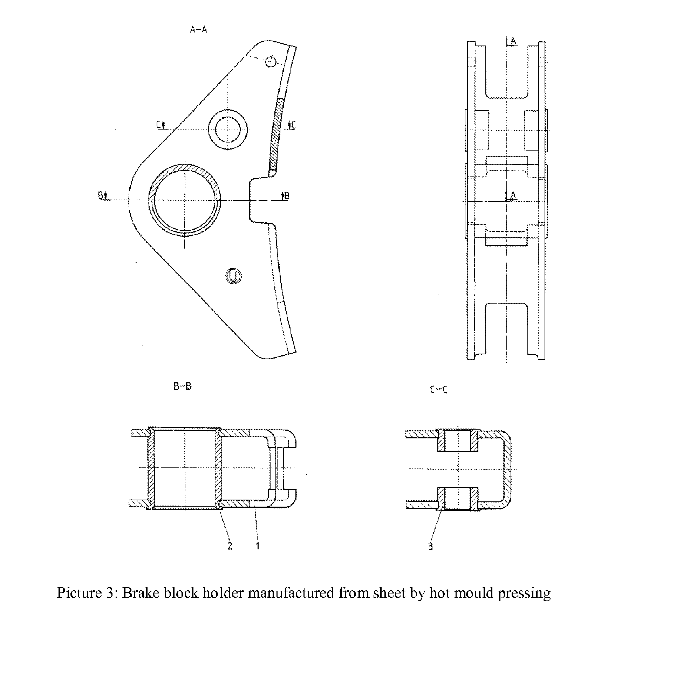

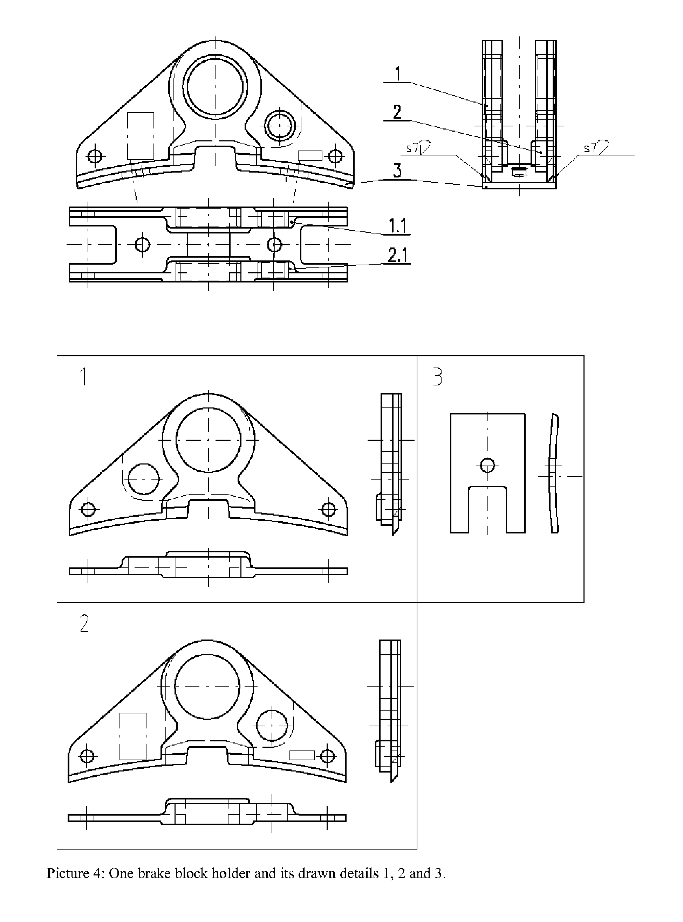

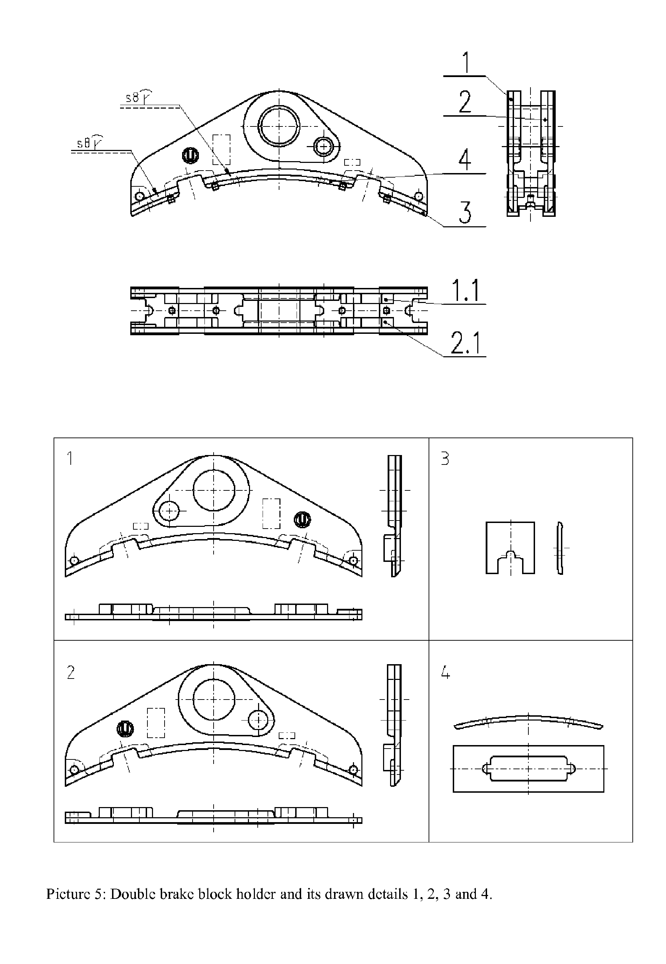

In the presence, three applications of the brake block holders use in the freight railway vehicles are known:
1. Brake block holder is manufactured by forging in the die or by casting into the form. This type of the brake block holder according to the drawing of UIC/ORE, drawing no. 300M3328 0007 is showed in the picture 1. Disadvantage of this method of production, forging and casting into the die, is, that it is impossible to meet the required curvature of the contact surface in the area of the contact of the holder and the brake block, and also it is impossible to meet its required thickness 7 minus 1 mm. The whole length of the contact surface has to be therefore additionally machined in order to meet required curvature of the surface in the area of the contact of the holder and the brake block and to meet required thickness of brake block bearing surface 7 mm with tolerance minus 1 mm and free instalment of the brake block fastening wedge.

Way of production by forging is very demanding for forging machines and it also limits shape optimization and casting is risk-bearing because of possible inner inhomogeneity of cast material.
2. Brake block holder is manufactured by welding of sheet parts. This type of the brake block holder according to the standardized drawing of UIC/ORE drawing no. 100M3328 0001 is showed in the picture 2. Brake block holder is manufactured by welding from sheet parts of side bearers, brake block bearing surfaces, bushes holders, crosspiece, but without reinforcement of the side bearers in the area of niches for brake block fastening pockets.
   Disadvantage of this method is its great labour input during production of parts and welding and the fact, that the non-reinforced part in the area of niches for the brake block shortens period of service of the brake block holder. Additional reinforcement of the side bearers in the area for niches of the brake block is economically disadvantageous.
3. Brake block holder is manufactured from sheet by hot mould pressing. This type of the brake block holder according to the standardized drawing of UIC/ORE drawing no. 100M3328 0008 0001 is showed in the picture 3 and it is protected by the patent. Brake block holder is manufactured from sheet by hot mould pressing, but without reinforcement of the side bearers in the area of constraint of the bushes and without reinforcement of the side bearers in the area of niches for brake block fastening pockets.
   Disadvantage of application of moulded side bearer is, that it does not allow reinforcement of the side bearers in the area of constraint of the bushes and niches for brake block and therefore period of service of the brake block is shortened.

Mentioned disadvantages are removed by new technical solution.

### Nature of technical solution

The nature of technical solution is a railway vehicle brake block holder, which consists of two side bearers forged in die, provided with reinforcements in the areas of constrains of the bushes and with reinforcements in the areas of niches for brake block fastening wedges, connected by curved sheet. Side bearers are connected with curved sheet by welding.

The nature of the technical solution is also the fact that the curved sheet has uniform radius of curvature and its thickness is 7 minus 1 mm.

Another fundamental of the technical solution is method of production of the railway vehicle brake block holder, which is based on the production of the side bearers by flat forging in the die and then by welding with curved sheet by weld s7y at one-block brake holder and/or with curved sheet by weld s8y at double-brake block holder.

Advantage of this method of production is simple forging of the side bearers with reinforcements, meeting the required radius and thickness of the curved sheet 7 minus 1 mm, which represents bearing surface of the brake block, without additional treatment, which is necessary for forged and cast products.

### Review of pictures in the drawings

Pictures 1 up to 3 document current state of technology and proposed new solution of one-brake block holder is in the picture 4 and double-brake block holder in the picture 5. Picture 1 depicts brake block holder manufactured by forging in the die or by casting into the form. This type corresponds to the brake block holder according to the standardised drawing of UIC/ORE drawing no. 300M3328 0007. In the picture 2 there is a brake block holder manufactured by welding of sheet parts. This type of the brake block holder is in accordance with standardised drawing of UIC/ORE drawing no. 100M3328 0001. Picture 3 depicts brake block holder manufactured by hot mould pressing. This type of brake block holder corresponds with the standardised drawing of UIC/ORE drawing no. 100M3328 0008. Picture 4 presents new solution, in which the one-brake block holder is manufactured by combination of forging in the die and welding. Picture 5 presents new solution, in which the double-brake block holder is manufactured by combination of forging in the die and welding.

### Examples of realization

### Example 1

In the Picture 4, there is showed a holder for one brake block (so called one-brake block holder) of railway vehicle, which consists of side bearers 1 and 2, forged in the die with optimized shape in the area of side bearers reinforcement 1.1 and 2.1 in the area of constraint of the bushes and reinforcements in the area of niches for brake block fastening wedges. New shape of the side bearer allows flat forging of the side bearer in the die. These side bearers 1 and 2 are welded together with curved sheet 3, with thickness 7 minus 1 mm, by welds s7y.

Brake block, which has a function of friction element that transfers braking force onto the wheel, has to be located on uniformly curved sheet 3, with thickness 7,0 mm with tolerance minus 1,0 mm, in order to provide regular contact surface of the brake blocks and regular brake block contact surface thickness.

### Example 2

In the Picture 5, there is showed a holder for two brake blocks (so called double-brake block holder) of railway vehicle, which consists of side bearers 1 and 2, forged in the die with new shape in the area of side bearers reinforcement 1.1 and 2.1 in the area of constraint of the bushes and reinforcements in the area of niches for brake block fastening wedges. New shape of the side bearer allows flat forging of the side bearer in the die. These side bearers 1 and 2 are welded together with curved sheet 3 and 4, with thickness 7 minus 1 mm, by welds s8y.
Brake block, which has a function of friction element that transfers braking force onto the wheel, has to be located on uniformly curved sheet 3, with thickness 7,0 mm with tolerance minus 1,0 mm, in order to provide regular contact surface of the brake blocks and regular brake block contact surface thickness.

### Industrial efficiency

Brake block holder is an integrated part of the brake equipment of railway vehicles and their bogies.

## Claims

1. Railway vehicle brake block holder comprising side bearers (1) and (2) forged in the die, provided with reinforcement (1.1) and (2.1) in the area of constraint of the bushes and reinforcements in the area of niches for brake block fastening wedges, connected with curved sheet ( 3) and (4).

2. Railway vehicle brake block holder as claimed in claim 1 wherein side bearers (1) and ( 2) are connected with curved sheet (3) and (4) by weld.

3. Railway vehicle brake block holder as claimed in claim 1 and 2 wherein curved sheet (3) and (4) has uniform radius of curvature and its thickness is 7 minus 1 mm.

4. Method of production of railway vehicle brake block holder wherein side bearers (1) and (2) are flat forged in the die and then they are welded together with curved sheet (3) by weld s7y at one-brake block holder and/or with curved sheet (3) and (4) by weld s8y at double-brake block holder.
